Europäisches Patentamt

European Patent Office

Office européen des brevets

(19)

(11) Veröffentlichungsnummer: **0 050 291**
**B1**

(12) # EUROPÄISCHE PATENTSCHRIFT

(45) Veröffentlichungstag der Patentschrift:
24.06.87

(51) Int. Cl.⁴: **F 16 L 3/00**

(21) Anmeldenummer: **81108219.7**

(22) Anmeldetag: **12.10.81**

(54) **Schlauchhalter.**

(30) Priorität: **20.10.80 US 198371**

(43) Veröffentlichungstag der Anmeldung:
**28.04.82 Patentblatt 82/17**

(45) Bekanntmachung des Hinweises auf die Patenterteilung:
**24.06.87 Patentblatt 87/26**

(84) Benannte Vertragsstaaten:
**AT DE FR GB IT NL SE**

(56) Entgegenhaltungen:
**DE - U - 1 727 460**
**US - A - 1 384 332**
**US - A - 2 414 220**
**US - A - 3 125 359**
**US - A - 3 245 428**
**US - A - 3 279 014**
**US - A - 3 412 760**
**US - A - 4 089 087**

(73) Patentinhaber: **DEERE & COMPANY, 1 John Deere Road, Moline Illinois 61265 (US)**

(72) Erfinder: **Shindelar, Aloysius Celestine, 7210 Hudson Heights, Hudson Iowa 50643 (US)**

(74) Vertreter: **Lins, Edgar, Dipl.-Phys. et al, Patentanwälte Gramm + Lins Theodor-Heuss-Strasse 2, D-3300 Braunschweig (DE)**

ACTORUM AG

## Beschreibung

Die Erfindung betrifft einen Schlauchhalter, insbesondere für Hydraulikschläuche, bestehend aus einem ersten und einem zweiten Gehäuseteil, die jeweils zumindest eine im Querschnitt halbkreisförmige Ausnehmung aufweisen und durch Verbindungsmittel so miteinander verbunden sind, dass die beiden halbkreisförmigen Ausnehmungen zusammen eine im Querschnitt kreisförmige Ausnehmung bilden, die ein offenes Ende aufweist.

Zwischen einem Traktor und einem angehängten Arbeitsgerät sind häufig mehrere Hydraulikschläuche verlegt, die üblicherweise an einem oder beiden Enden eine Unterbrecher-Steckkupplung aufweisen. Soll das Arbeitsgerät vom Traktor abgekuppelt werden, wird die Unterbrecher-Steckkupplung des Hydraulikschlauches abgezogen. Anschliessend besteht dann die Gefahr, dass dieses Schlauchende Berührung mit dem Boden bekommt und dadurch verdreckt. Diese Verschmutzung setzt sich an der fettigen Oberfläche der Steckkupplung fest und kann später in den Hydraulikkreislauf gelangen und dort zu Störungen führen. Zur Vermeidung dieser Probleme sind Schlauchhalter entwickelt worden, um den Hydraulikschlauch im Abstand oberhalb des Bodens zu halten. Den meisten der bisherigen Vorschläge haften zwei wesentliche Nachteile an: Es erfordert zu viel Kraft, um die Unterbrecher-Steckkupplung in den Schlauchhalter einzuführen; ausserdem ist das Ende der genannten Steckkupplung nicht ausreichend geschützt.

Die US-Patentschriften 3 125 359 und 4 089 087 zeigen zwei Schlauchhalter der in Rede stehenden Art.

Der Erfindung liegt die Aufgabe zugrunde, den eingangs erläuterten Schlauchhalter so zu verbessern, dass sich das abgekuppelte Ende eines Hydraulikschlauches in einfacher und sicherer Weise festlegen lässt, wobei das Schlauchende gleichzeitig vor Verschmutzung geschützt ist.

Diese Aufgabe wird gemäss der Erfindung dadurch gelöst, dass die Ausnehmung nur ein offenes Ende aufweist, und dass zwischen dem ersten und zweiten Gehäuseteil ein in die kreisförmige Ausnehmung ragender Halter vorgesehen ist, der die äussere Mantelfläche eines in die genannte Ausnehmung gesteckten Endes des Schlauches beaufschlagt und es somit innerhalb der Ausnehmung arretiert.

Da die genannte Ausnehmung erfindungsgemäss nur zu einer Gehäuseseite hin offen ist, wird die Einstecköffnung von dem eingesteckten Schlauchende weitgehend verschlossen, so dass das Schlauchende vor Verschmutzung geschützt ist. Der Halter, der erfindungsgemäss eine Feder sein kann, führt zu einer einfachen und sicheren Arretierung des in die Ausnehmung eingesteckten Schlauchendes.

Um nicht nur das Schlauchende festzuhalten, kann erfindungsgemäss eine mit dem ersten und zweiten Gehäuseteil verbundene Klemmhalterung vorgesehen werden, die einen im Abstand vom Schlauchende befindlichen Schlauchabschnitt festhält.

Zur weiteren Verbesserung des Schutzes gegen Verschmutzung ist es vorteilhaft, wenn das offene Ende jeder kreisförmigen Öffnung der Gehäuseteile durch eine Staubkappe abgedeckt ist, die mehrere biegbare Kreissegmente aufweist, die ein Hindurchstecken der Unterbrecher-Steckkupplung ermöglichen.

Der erfindungsgemässe Schlauchhalter ist preiswert in der Herstellung und lässt sich in einfacher Weise auf dem Rahmen eines Fahrzeugs oder eines Arbeitsgerätes befestigen.

Weitere Merkmale der Erfindung sind Gegenstand der Unteransprüche und werden anhand eines Ausführungsbeispieles hinsichtlich ihrer Vorteile näher erläutert.

In der Zeichnung sind einige als Ausführungsbeispiele dienende Ausführungsformen der Erfindung dargestellt. Es zeigen:

Figur 1 in Seitenansicht einen auf einem Träger befestigten Schlauchhalter;

Figur 2 in vergrössertem Massstab einen Querschnitt durch den Schlauchhalter mit eingesteckter Unterbrecher-Steckkupplung;

Figur 3 den Schlauchhalter in Seitenansicht und zum Teil im Längsschnitt;

Figur 4 die Darstellung gemäss Figur 3 in Stirnansicht;

Figur 5 einen Längsschnitt durch die untere Hälfte der Darstellung gemäss Figur 4;

Figur 6 den Schlauchhalter in perspektivischer Darstellung;

Figur 7 ein Klemmteil in Draufsicht;

Figur 8 die Darstellung gemäss Figur 7 in Seitenansicht;

Figur 9 eine Staubkappe in Draufsicht;

Figur 10 einen Querschnitt durch die Staubkappe gemäss Figur 9 und

Figur 11 in einer Explosionsdarstellung ein Klemmteil, einen Schlauchhalter sowie eine Unterbrecher-Steckkupplung.

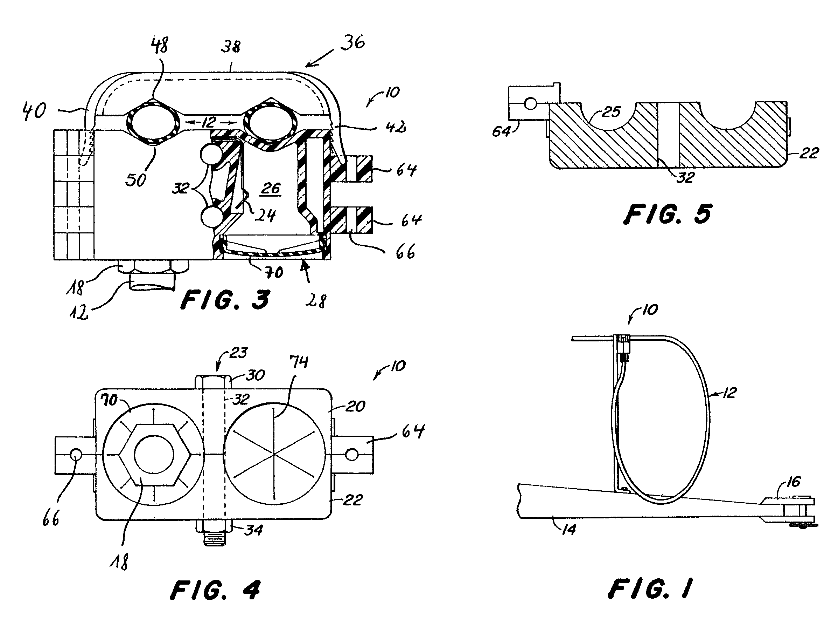

Figur 1 zeigt einen Schlauchhalter 10 zur sicheren Festlegung eines abgekuppelten Hydraulikschlauches 12. Der Schlauchhalter 10 kann auf einem Rahmen 14 eines Fahrzeugs oder eines Arbeitsgerätes montiert sein. Gemäss Figur 1 weist der Arm 14 eine Kupplung 16 auf, wie sie bei landwirtschaftlichen Arbeitsgeräten üblich ist.

Gemäss Figur 2 ist in den Schlauchhalter 10 eine mit dem Ende eines Hydraulikschlauches 12 verbundene Unterbrecher-Steckkupplung 18 gesteckt. Ausserdem kann der dargestellte Schlauchhalter 10 einen Abschnitt des Hydraulikschlauches 12 festlegen, der in grösserem Abstand von der genannten Kupplung 18 liegt.

Gemäss den Figuren 2 bis 6 besteht der Schlauchhalter 10 aus einem ersten und einem zweiten Gehäuseteil 20, 22, aus Verbindungsmitteln 23 sowie einem Halter 24. Die beiden Gehäuseteile 20, 22 weisen jedes zumindest eine im Querschnitt halbkreisförmig ausgebildete Ausnehmung 25 auf (siehe Figur 5), die zusammen eine im Querschnitt kreisförmige Ausnehmung 26 mit nur einem offenen Ende 28 bilden, wenn die beiden Gehäuseteile 20, 22 über die Verbindungsmittel 23 miteinander verbunden sind. Die Kupplung 18 wird in das offene Ende 28 der genannten
Ausnehmung 26 gesteckt. Die Verbindungsmittel
23 bestehen bei dem dargestellten Ausführungsbeispiel aus Bolzen 30, die durch jeweils eine
Bohrung 32 gesteckt und mit einer Haltemutter 34
gesichert sind. Andere Verbindungsmittel wie z.B.
Stifte, Schrauben oder Klipse können ebenfalls
verwendet werden.

Der Halter 24 ist zwischen dem ersten und zweiten Gehäuseteil 20, 22 angeordnet und ragt so in
die Ausnehmung 26, dass er die äussere Mantelfläche der eingeführten Steckkupplung 18 beaufschlagen und diese somit innerhalb der Ausnehmung 26 arretieren kann. Der Halter 24 ist vorzugsweise an der inneren Mantelfläche der Ausnehmung 26 angeordnet und kann durch einen
flexiblen, dehnbaren Ring, eine federbeaufschlagte Einrichtung, oder aber eine Feder selbst sein,
wie z.B. eine Ringbandfeder; andere lösbare Arretiermittel sind denkbar.

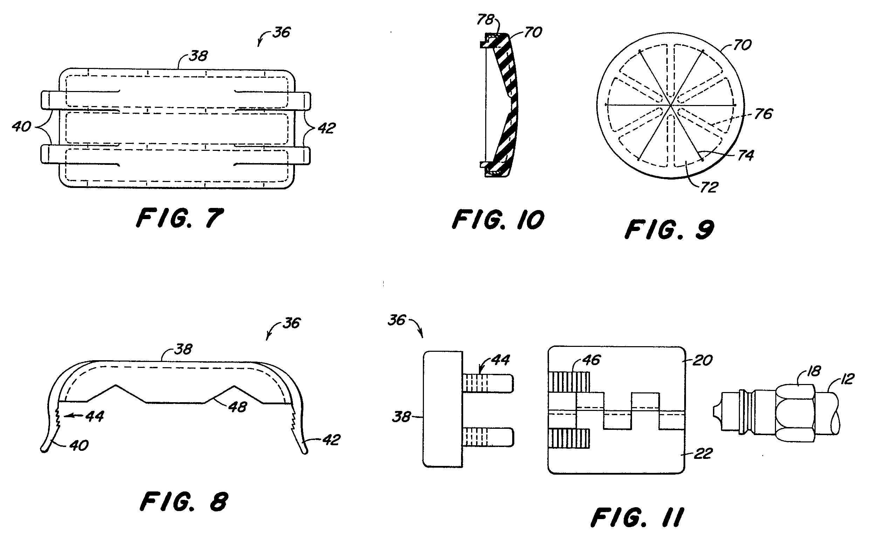

Die Figuren 7 und 8 zeigen eine Klemmhalterung 36, die gemäss Figur 3 auf die beiden Gehäuseteile 20, 22 aufgedrückt werden kann. Die
Klemmhalterung 36 dient zur klemmenden Festlegung eines Abschnitts des Hydraulikschlauches
12 an den Gehäuseteilen 20, 22 und besteht aus
einem einteiligen Klemmteil 38 mit sich gegenüberliegenden und miteinander fluchtenden flexiblen Zungen 40, 42. Auf jeder Seite des Klemmteils 38 können eine oder mehrere Zungen angeordnet sein, die jeweils mit Zähnen 44 versehen
sind, die sägeartig ausgebildet sein können, wobei die Schneiden zum Klemmteil 38 hin gerichtet
sind. Diese Zähne 44 sind eingedrückt in Zähne
46, die auf den Seitenwandungen der beiden Gehäuseteile 20, 22 vorgesehen sind. Das Klemmteil
38 weist ausserdem eine oder mehrere Vertiefungen 48 auf, die rechtwinklig zu den Zungen 40, 42
verlaufen.

Figur 2 zeigt für die Klemmhalterung 36 eine
abgewandelte Ausführungsform. Hier weist ein
einteiliges Klemmteil 52 sich gegenüberliegende
und miteinander fluchtende flexible Finger 54, 56
auf, die hakenförmig ausgebildet sind und Schultern 58, 60 der beiden Gehäuseteile 20, 22 untergreifen. Zwischen den genannten Fingern ist eine
Vertiefung 62 vorgesehen, die einer in den beiden
Gehäuseteilen 20, 22 vorgesehenen Vertiefung 50
zugeordnet ist. Gemeinsam dienen die Vertiefungen 48, 62 und 50 zum Festklemmen eines
Schlauchabschnittes, der in grösserer Entfernung
von der Steckkupplung 18 liegt. Durch die Klemmhalterung 36, für die auch andere Ausführungsformen denkbar sind, lässt sich somit verhindern,
dass ein längerer Abschnitt des Hydraulikschlauches 12 frei herumhängt und verdrehen kann.

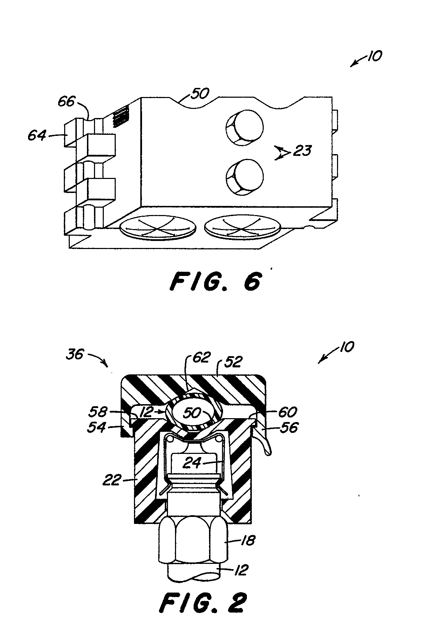

Insbesondere die Figuren 5 und 6 lassen erkennen, dass die beiden Gehäuseteile 20, 22 auf einer
Seite mehrere gegeneinander versetzt angeordnete obere und untere Nasen 64 aufweisen, die bei
der Verbindung der Gehäuseteile 20, 22 miteinander auf beiden Seiten des Schlauchhalters 10 liegen, da die beiden Gehäuseteile 20, 22 symmetrisch ausgebildet sind. Jede Nase 64 weist eine
im Querschnitt halbkreisförmige Bohrung 66 auf,
deren Achse durch alle versetzt angeordneten
Nasen auf einer Seite des Gehäuses hindurchläuft. Dadurch lässt sich mit dem Schlauchhalter
10 ein zweiter, identisch ausgebildeter Schlauchhalter verbinden, in dem lediglich ein nicht dargestellter Stift durch die miteinander fluchtenden
Bohrungen 66 der Nasen 64 gesteckt wird.

Jeder Schlauchhalter 10 kann so ausgebildfet
sein, dass er zwei Hydraulikschläuche 12 festhalten kann, da die meisten Hydraulikeinrichtungen
mit zwei Schläuchen ausgestattet sind. Bei grossen landwirtschaftlichen Traktoren sind vier,
sechs oder sogar acht Hydraulikschläuche angeschlossen, so dass hier mehrere Schlauchhalter
10 miteinander verbunden werden können.

Die Figuren 9 und 10 zeigen eine biegsame
Staubkappe 70, die bereits Gegenstand der älteren nicht vorveröffentlichten europäischen Patentanmeldung EP-A-40 403 ist. Die Staubkappe 70 ist
durch mehrere Radialschlitze 74 in kreissegmentförmige Dichtlippen 72 unterteilt, die zur Versteifung auf ihrer einen Seite eine Stützrippe 76 aufweisen können. Diese Staubkappe 70 dient zur
Abdeckung der Öffnung 28 der Ausnehmung 26.
Wird eine Steckkupplung 18 durch diese Staubkappe 70 hindurch in die Ausnehmung 26 eingeführt, werden die Dichtlippen 72 nach innen gebogen und legen sich dabei abdichtend an der äusseren Mantelfläche der Steckkupplung 18 an. Die
Staubkappe 70 besteht vorzugsweise aus einem
flexiblen, gummiähnlichen Material und kann eine
Metalleinlage 78 aufweisen, die zur Formstabilisierung der Staubkappe 70 sowie zur Sicherung
des Sitzes der Staubkappe innerhalb der Öffnung
28 dient.

Die Explosionsdarstellung gemäss Figur 11
zeigt die Steckkupplung 10, die beiden miteinander verbundenen Gehäuseteile 20, 22 sowie die
Klemmhalterung 36. Letztere wird auf diejenige
Seite der Gehäuseteile 20, 22 gedrückt, die der
Öffnung 28 der Ausnehmung 26 gegenüberliegt.

**Patentansprüche**

1. Schlauchhalter (10), insbesondere für Hydraulikschläuche (12), bestehend aus einem ersten und einem zweiten Gehäuseteil (20, 22), die
jeweils zumindest eine im Querschnitt halbkreisförmige Ausnehmung (25) aufweisen und durch
Verbindungsmittel (23) so miteinander verbunden
sind, dass die beiden halbkreisförmigen Ausnehmungen (25) zusammen eine im Querschnitt kreisförmige Ausnehmung (26) bilden, die ein offenes
Ende (28) aufweist, dadurch gekennzeichnet, dass
die Ausnehmung (26) nur ein offenes Ende (28)
aufweist, und dass zwischen dem ersten und zweiten Gehäuseteil (20, 22) ein in die kreisförmige
Ausnehmung (26) ragender Halter (24) vorgesehen ist, der die äussere Mantelfläche eines in die
genannte Ausnehmung (26) gesteckten Endes des
Schlauches (12) beaufschlagt und es somit innerhalb der Ausnehmung (26) arretiert.

2. Schlauchhalter nach Anspruch 1, dadurch gekennzeichnet, dass die Verbindungsmittel (23) eine Bolzenverschraubung (30, 32, 34) sind.

3. Schlauchhalter nach Anspruch 1 oder 2, dadurch gekennzeichnet, dass der genannte Halter (24) eine Feder ist.

4. Schlauchhalter nach Anspruch 1, 2 oder 3, gekennzeichnet durch eine mit dem ersten und zweiten Gehäuseteil (20, 22) verbundene Klemmhalterung (36), .die einen im Abstand vom Schlauchende befindlichen Schlauchabschnitt festhält.

5. Schlauchhalter nach Anspruch 4, dadurch gekennzeichnet, dass die Klemmhalterung (36) aus einem einteiligen Klemmteil (38) mit sich gegenüberliegenden flexiblen Zungen (40, 42) besteht, die jeweils mit einer Vielzahl sägeartiger Zähne (44) versehen sind, die in Eingriff stehen mit auf den Seitenwandungen der Gehäuseteile (20, 22) vorgesehenen Zähnen (46).

6. Schlauchhalter nach Anspruch 5, dadurch gekennzeichnet, dass die genannten Zähne (46) an den beiden Gehäuseteilen (20, 22) mit ihren Schneiden in Richtung auf das offene Ende (28) der genannten kreisförmigen Ausnehmung (26) geneigt sind.

7. Schlauchhalter nach Anspruch 4, dadurch gekennzeichnet, dass die Klemmhalterung (36) aus einem einteiligen Klemmteil (52) mit sich gegenüberliegenden flexiblen, hakenförmigen Fingern (54, 56) besteht, die Schultern (58, 60) der beiden Gehäuseteile (20, 22) untergreifen.

8. Schlauchhalter nach einem der vorhergehenden Ansprüche, dadurch gekennzeichnet, dass die beiden Gehäuseteile (20, 22) symmetrisch ausgebildet sind und jeweils auf zwei sich gegenüberliegenden Seiten mehrere im Abstand voneinander angeordnete, nach aussen ragende Nasen (64) mit im Querschnitt halbkreisförmigen Bohrungen (66) tragen.

9. Schlauchhalter nach einem der vorhergehenden Ansprüche, dadurch gekennzeichnet, dass die im Querschnitt kreisförmige Ausnehmung (26) der beiden Gehäuseteile (20, 22) zur Aufnahme einer mit dem einen Schlauchende verbundenen Unterbrecher-Steckkupplung (18) dient.

10. Schlauchhalter nach Anspruch 9, dadurch gekennzeichnet, dass in jedem der beiden Gehäuseteile (20, 22) zumindest eine rechtwinklig zu der genannten kreisförmigen Ausnehmung (26) verlaufende Vertiefung (50) vorgesehen ist, der eine entsprechende Vertiefung (48, 62) in der Klemmhalterung (36) gegenüberliegt und zur Aufnahme eines im Abstand von der Unterbrecher-Steckkupplung (18) befindlichen Schlauchabschnittes dient.

11. Schlauchhalter nach Anspruch 8, 9 oder 10, dadurch gekennzeichnet, dass die Zähne (46) auf den beiden Seitenwandungen der beiden Gehäuseteile (20, 22) angeordnet sind, die auch die genannten Nasen (64) tragen, deren Bohrungen (66) parallel zu der Ausnehmung (26) verlaufen.

12. Schlauchhalter nach einem der vorhergehenden Ansprüche, dadurch gekennzeichnet, dass die beiden Gehäuseteile (20, 22) zusammen zwei kreisförmige Ausnehmungen (26) bilden, die jeweils nur ein offenes Ende (28) aufweisen und in die jeweils ein Halter (24) ragt, um eine in die genannte Ausnehmung (26) gesteckte Unterbrecher-Steckkupplung (18) zu arretieren, wobei das Klemmteil (38, 52) der Klemmhalterung (36) zwei parallel liegende Vertiefungen (48, 62) aufweist, denen zwei entsprechende Vertiefungen (50) in den beiden Gehäuseteilen (20, 22) zugeordnet sind.

13. Schlauchhalter nach einem der vorhergehenden Ansprüche, dadurch gekennzeichnet, dass das offene Ende (28) jeder kreisförmigen Öffnung (26) der Gehäuseteile (20, 22) durch eine Staubkappe (70) abgedeckt ist, die mehrere biegbare Kreissegmente (72) aufweist, die ein Hindurchstecken der Unterbrecher-Steckkupplung (18) ermöglichen.

**Claims**

1. Hose retainer (10), especially for hydraulic hoses (12), comprising first and second body members (20, 22) each containing at least one semi-circular bore (25) and attachment means (23) for joining together said first and second body members (20, 22) so that said two semi-circular bores (25) form together a circular bore (26) having an exposed end (28), characterized in that said bore (26) comprises one exposed end (28) only, and that between said first and second body members (20, 22) retention means (24) is located projecting into said circular bore (26) and acting upon the external surface of an end of the hose (12) inserted into said circular bore (26) and thus locking the same within the circular bore (26).

2. Hose retainer according to claim 1, characterized in that said attachment means (23) is an interlocking device (30, 32, 34).

3. Hose retainer according to claim 1 or 2, characterized in that said retention means (24) is a spring.

4. Hose retainer according to claim 1, 2 or 3, characterized by clamping means (36) connected to said first and second body members (20, 22) for supporting a section of said hose (12) which is distant from said end of said hose.

5. Hose retainer according to claim 4, characterized in that said clamping means (36) comprises a one-part clamping member (38) having oppositely aligned flexible tabs (40, 42), each tab having a plurality of serrated teeth (44) being in mesh with teeth (46) provided on the side walls of said body members (20, 22).

6. Hose retainer according to claim 5, characterized in that said teeth (46) on said first and second body members (20, 22) have apexes slanted towards the exposed end (28) of said circular bore (26).

7. Hose retainer according to claim 4, characterized in that said clamping means (36) comprises a one-part clamping member (52) having oppositely aligned flexible hook-like fingers (54, 56) gripping under shoulders (58, 60) located on said first and second body members (20, 22).

8. Hose retainer according to one of the preceding claims, characterized in that both body members (20, 22) are symmetrically shaped and comprise a plurality of spaced apart projections (64) extending outward from two oppositely aligned sides of each of said first and second body members (20, 22) and having semicircular bores (66).

9. Hose retainer according to one of the preceding claims, characterized in that said circular bore (26) of said first and second body members (20, 22) is provided for the insertion of a breakaway coupler (18) attached to one end of the hose.

10. Hose retainer according to claim 9, characterized in that each of said first and second body members (20, 22) comprises at least one recess (50) aligned perpendicular to said circular bore (26) and being opposite to an adequate recess (48, 62) located in said clamping means (36) and for supporting a section of said hose distantly spaced from the breakaway coupler (18).

11. Hose retainer according to claims 8, 9 or 10, characterized in that said teeth (46) are located on the two sides of said first and second body members (20, 22), which also contain said projections (64), the bores (66) of which are aligned parallelly to said circular bore (26).

12. Hose retainer according to one of the preceding claims, characterized in that both body members (20, 22) form together two circular bores (26) each of which having only one exposed end (28), and retention means (24) are projecting into each of said exposed ends in order to lock a breakaway coupler (18) inserted into said recess (26), whereby said clamping member (38, 52) of said clamping means (36) comprises two parallelly aligned recesses (48, 62) cooperating with two corresponding recesses (50) on said first and second body members (20, 22).

13. Hose retainer according to one of the preceding claims, characterized in that said exposed end (28) of each circular bore (26) of said first and second body members (20, 22) is closed by a dust cover (70) having a plurality of bendable pie-shaped sections (72) which permit the through passage of said breakaway coupler (18).

**Revendications**

1. Support pour tuyaux (10), en particulier pour tuyaux hydrauliques (12), comprenant une première et une seconde parties de corps (20, 22) présentant chacune au moins un logement (25) ayant en section droite une forme semi-circulaire et reliées entre elles par des moyens de liaison (23) de telle façon que les deux logements semi-circulaires (25) forment ensemble un logement (26) ayant une section droite circulaire et présentant une extrémité ouverte (28), caractérisé en ce que le logement (26) ne comporte qu'une extrémité ouverte (28), et en ce qu'il est prévu entre la première et la seconde parties de corps (20, 22), un organe de support (24) faisant saillie dans le logement circulaire (26) qui agit sur la surface périphérique extérieure d'une extrémité du tuyau (12) insérée dans le logement (26) cité et, ainsi, la bloque à l'intérieur du logement (26).

2. Support pour tuyaux suivant la revendication 1, caractérisé en ce que les moyens de liaison (23) consistent en un boulonnage (30, 32, 34).

3. Support pour tuyaux suivant la revendication 1 ou 2, caractérisé en ce que ledit organe de support (24) est un ressort.

4. Support pour tuyaux suivant la revendication 1, 2 ou 3, caractérisé par un organe de retenue formant pince (36) reliant la première et la seconde parties (20, 22) du corps, cet organe retenant un tronçon de tuyau se trouvant écarté de l'extrémité du tuyau.

5. Support pour tuyaux suivant la revendication 4, caractérisé en ce que l'organe de retenue formant pince (36) est constitué par une pince d'un seul tenant (38) munie de languettes opposées flexibles (40, 42) présentant chaque fois un grand nombre de dents (44) à profil en dents de scie qui sont en prise avec des dents (46) prévues sur les parois latérales des parties (20, 22) du corps.

6. Support pour tuyaux suivant la revendication 5, caractérisé en ce que les dents précitées (46) prévues sur les deux parties (20, 22) du corps sont inclinées de telle sorte que leurs arêtes soient orientées vers l'extrémité ouverte (28) du logement circulaire précité (26).

7. Support pour tuyaux suivant la revendication 4, caractérisé en ce que l'organe de retenue formant pince (36) est constitué par une pince d'un seul tenant (52) munie de doigts flexibles opposés (54, 56) en forme de crochets, qui s'engagent sous des épaulements (58, 60) des deux parties (20, 22) du corps.

8. Support pour tuyaux suivant l'une quelconque des revendications précédentes, caractérisé en ce que les deux parties (20, 22) du corps sont symétriques et portent chaque fois sur deux côtés opposés l'un à l'autre plusieurs becs (64) faisant saillie vers l'extérieur et écartés les uns des autres, ces becs présentent des alésages (66) ayant en section droite une forme semi-circulaire.

9. Support pour tuyaux suivant l'une quelconque des revendications précédentes, caractérisé en ce que le logement (26) de section droite circulaire des deux parties (20, 22) du corps sert à la réception d'un embout de raccord rapide à obturation (18) relié à une extrémité du tuyau.

10. Support pour tuyaux suivant la revendication 9, caractérisé en ce qu'il est prévu, dans chacune des deux parties (20, 22) du corps, au moins une dépression (50) s'étendant perpendiculairement au logement circulaire précité (26), cette dépression se trouvant opposée à une dépression correspondante (48, 62) prévue dans l'organe de retenue formant pince (36) et servant à la réception d'un tronçon de tuyau écarté de l'embout de raccord rapide à obturation (18).

11. Support pour tuyaux suivant la revendication 8, 9 ou 10, caractérisé en ce que les dents (46) sont ménagées sur les deux parois latérales des deux parties (20, 22) du corps qui portent également les becs précités (64) dont les alésages (66) s'étendent parallèlement au logement (26).

12. Support pour tuyaux suivant l'une quelconque des revendications précédentes, caractérisé en ce que les deux parties (20, 22) du corps forment ensemble deux logements circulaire (26) qui présentent chaque fois une seule extrémité ouverte (28) et dans lesquels fait chaque fois saillie un organe de support (24) pour immobiliser un embout de raccord rapide à obturation (18) engagé dans le logement précité (26), la pince (38, 52) de l'organe de retenue formant pince (36) présentant deux dépressions parallèles (48, 62) auxquelles sont conjuguées deux dépressions correspondantes (50) prévues dans les deux parties (20, 22) du corps.

13. Support pour tuyaux suivant l'une quelconque des revendications précédentes, caractérisé en ce que l'extrémité ouverte (28) de chaque logement circulaire (26) des parties (20, 22) du corps est recouverte par un capuchon pare-poussière (70) qui présente plusieurs segments circulaires flexibles (72) permettant le passage par emboîtement de l'embout de raccord rapide à obturation (18).

FIG. 3

FIG. 5

FIG. 4

FIG. 1

0 050 291

*10*

66

64

*50*

*23*

**FIG. 6**

*10*

36

*62*  *52*

58  *12*  *50*  *60*

54  *56*

22  *24*

*18*

*12*

**FIG. 2**

FIG. 7

FIG. 10

FIG. 9

FIG. 8

FIG. II

0 050 291